(19) Europäisches Patentamt / European Patent Office / Office européen des brevets

(11) **EP 1 853 071 B1**

(12) **EUROPEAN PATENT SPECIFICATION**

(45) Date of publication and mention
of the grant of the patent:
**14.09.2011 Bulletin 2011/37**

(51) Int Cl.:
*H04N 9/64* (2006.01)

(21) Application number: **06009116.2**

(22) Date of filing: **03.05.2006**

(54) **Video signal processor for color video camera**

Videosignalprozessor für Farbvideokamera

Processeur de signal vidéo pour caméra vidéo couleur

(84) Designated Contracting States:
**DE FR GB IT**

(43) Date of publication of application:
**07.11.2007 Bulletin 2007/45**

(73) Proprietor: **STMicroelectronics (Research & Development) Limited**
**Marlow, Buckinghamshire SL7 1YL (GB)**

(72) Inventor: **Stewart, Brian**
**Edinburgh EH7 4HE (GB)**

(74) Representative: **McBride, Peter Hill**
**Murgitroyd & Company**
**Scotland House**
**165-169 Scotland Street**
**Glasgow**
**G5 8PL (GB)**

(56) References cited:
**EP-A- 0 729 278       US-A1- 2004 085 458**
**US-B1- 6 366 692**

• TOI T: "COLOR SIGNAL PROCESSING TECHNIQUE FOR SINGLE-CHIP CCD CAMERAS THAT EMPLOY CPUS WITH SIMD INSTRUCTION SETS" IEEE TRANSACTIONS ON CONSUMER ELECTRONICS, IEEE SERVICE CENTER, NEW YORK, NY, US, vol. 46, no. 2, May 2000 (2000-05), pages 291-294, XP001100223 ISSN: 0098-3063
• LEACOCK T ET AL: "AN HDTV DIGITAL CAMERA PROCESSOR" SMPTE JOURNAL, SMPTE INC. SCARSDALE, N.Y, US, vol. 103, no. 9, 1 September 1994 (1994-09-01), pages 580-585, XP000445484 ISSN: 0036-1682

**Description**

This invention relates to a method and apparatus for processing colour picture signals. The invention relates particularly to the processing of colour video (moving picture) signals from solid state image sensors, but may have application in other forms of picture signals.

**Background to the invention**

In solid state image sensors providing colour images, an array of pixels is overlaid with a pattern of colour filters. One common pattern is the Bayer pattern in which alternate rows are G,R,G,R... and B,G,B,G.... It is usual for the output from the image sensor to be processed to give RGB values for each pixel. In the prior art such processing is carried out in hardware and known solutions make different trade-offs between image quality on the one hand and computational load or circuit complexity on the other. See for example US 6,757,012 (Hubena et al), US 5,008,739 (D'Luna et al) and US 3,971,065 (Bayer et al).

The paper entitled 'Color Signal Processing Technique For Single-Chip CCD Cameras That Employ CPUs with SIMD Instruction Sets' by Toi et al. describes a colour signal processing technique for use in single chip CCD cameras. This paper makes reference to a 3 by 3 matrix operation that includes white balancing.

**Brief description of the invention**

The present invention can be carried out either by means of software or by hardware, for example in an ASIC implementation, and seeks to reduce the computation required and thus in software to require less computation power and/or better image quality, and in hardware to require lower operational power and reduced silicon design area.

The invention provides a method of processing image data produced by a solid state image sensor having a colour filter array of pixels to produce three-component colour signals for each pixel; the method comprising:

> performing collection of white balance statistics in a single data retrieval from a main memory of pixel image data; and performing at least range scaling, demosaicing, application of white balance statistics, matrixing, range clipping and gamma correction in a further single data retrieval from the main memory of pixel image data, wherein the application of the white balance statistics collected in the data retrieval from a main memory is done together with the matrixing within one set of arithmetic calculations, and said one set of arithmetic calculations is preceded by a step of testing to determine whether the application of a gain value will push a pixel value into saturation, and then, if the value will be pushed into saturation, clipping the pixel value to a saturated value before matrixing.

Preferably, the data retrieval from a main memory for white balance statistics collection is performed only on a sample of the pixel data from selected pixels.

Preferably, the sampling is between 1:4 and 1:16 linearly.

Preferably, range scaling is performed by use of a look-up table as pixel values are retrieved for demosaicing.

Preferably, the colour filter array is a RBG Bayer pattern; in which demosaicing is performed on 2x2 blocks or quads each containing two green, one red, and one blue pixel; and in which a single red value is calculated and applied to all pixels of the quad, and a single blue value is calculated and applied to all pixels of the quad.

Preferably, said single red value is calculated as $(2r_1+r_2+r_3)/4$ where $r_1$ is the value from the red pixel within the quad and $r_2$ and $r_3$ are the values from red pixels adjacent the quad, and said single blue value is calculated as $(2b_1+b_2+b_3)/4$ where $b_1$ is the value from the blue pixel within the quad and $b_2$ and $b_3$ are the values from blue pixels adjacent the quad.

Preferably, said single red and blue values are used in performing white balancing and matrixing.

Preferably, said testing comprises testing each colour component value of each pixel against a pre-calculated value for that colour. Preferably, the pre-calculated values are derived from white balance gain values.

Preferably, range clipping and gamma correction are performed as a single operation by reference to a look-up table.

Preferably, the look-up table is organised such that negative input values wrap to high values of an unsigned short value.

According to a second aspect there is provided apparatus for processing image data produced by a solid state image sensor having a colour filter array of pixels to produce three-component colour signals for each pixel; the apparatus comprising:

> means adapted to collect white balance statistics said image data in a single data retrieval from a main memory; and range scaling, demosaicing, application of white balance statistics, matrixing, range clipping and gamma correction means adapted to receive said image data and to perform range scaling demosaicing, matrixing, range clipping and gamma correction in a single data retrieval from the main memory of said pixel image data, wherein:

the range scaling, demosaicing, application of white balance statistics, matrixing, range clipping and gamma correction means comprises calculation means adapted to apply the collected white balance statistics together with the matrixing using one set of arithmetic calculations; and

the calculation means is connected to a testing means, said testing means being for testing to determine whether the application of a gain value will push a pixel value into saturation, and then, if the value will be pushed into saturation, clipping the pixel value to a saturated value before matrixing.

According to a third aspect there is provided a solid state image sensor comprising a colour filter array of pixels providing three-component colour signals for each pixel, and image processing apparatus in accordance with the second aspect.

Preferably, the colour filter array is a red/green/blue Bayer pattern.

According to a fourth aspect there is provided a webcam including a solid state image sensor in accordance with the third aspect.

Preferably, at least part of said range scaling, demosaicing, application of white balance statistics, matrixing, range clipping and gamma correction means is implemented by software loaded in a computer with which the webcam is associated.

According to a fifth aspect there is provided a digital still or video camera including an image sensor in accordance with third aspect.

According to a sixth aspect there is provided a mobile telephone including an image sensor in accordance with the third aspect.

According to a seventh aspect there is provided a PDA including an image sensor in accordance with the third aspect.

## Description of preferred embodiment

An embodiment of the invention will now be described, by way of example only, with reference the drawings, in which:

Fig. 1 illustrates a prior art process;
Fig. 2 is an overview of one process embodying the present invention;
Fig. 3 shows sampling of part of a pixel array;
Fig. 4 illustrates the division of the colour filter array into quads;
Fig. 5 illustrates the derivation of red values for the four pixels of the quad'
Fig. 6 does likewise for blue;
Fig. 7 shows the handling of green values for the quad; and
Fig. 8 illustrates the structure of a look-up table used in part of the method.

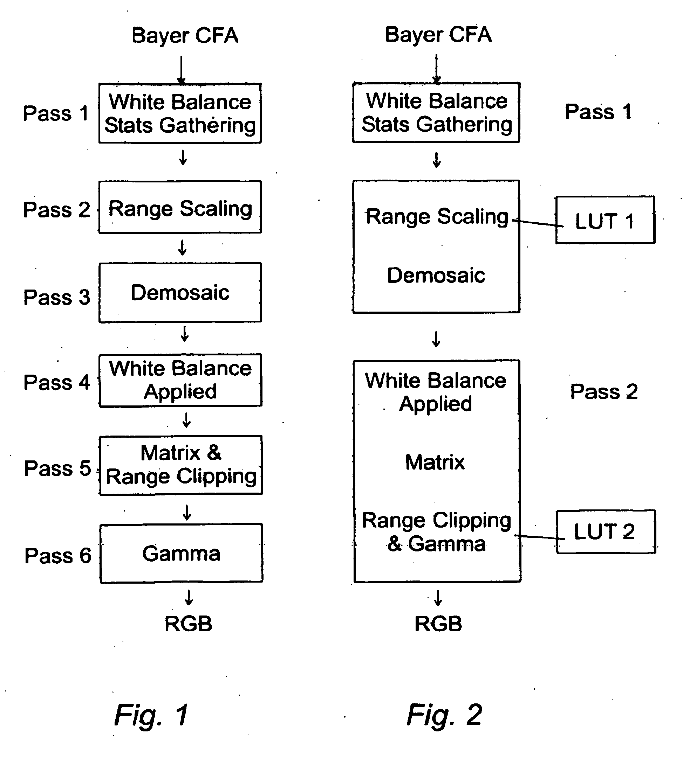

Referring to Fig. 1, there is shown a flow chart for a conventional process of converting Bayer Colour Filter Array (CFA) signals to RG signals for each pixel. The process comprises separate steps of: gathering white balance statistics; range scaling; demosaicing; applying white balance; matrix and range clipping; and gamma correction. This process has the advantage that it is entirely modular, and thus the steps can be implemented and modified independently. However, it has the disadvantage that each step requires a complete pass through the entire image. Each of these passes implies data retrieval which, in the absence of a large cache, implies multiple accesses to/from the main memory, often to the same data. This puts limits to the speed and/or accuracy of the process, or requires additional computational hardware.

Turning to the present invention, the preferred embodiment will be described with reference to a software implementation. This embodiment is based on three assumptions.

The main assumption for software video processing (soft-vp) implementations is that image quality can be sacrificed as the task of creating a high-quality still will be undertaken by a different algorithm. High quality stills processing will be known as soft-stills processing or soft-sp. Of paramount importance for soft-vp is execution time and hence algorithmic and implementation efficiency.

It is a further assumption that soft-vp implementation will have access to some memory in which to store look-up tables (LUTs) which are used to store results for partial calculation etc. The required for LUT memory in the present example is 64Kbytes+256 bytes. These LUT's can of course be replaced by calculation if the necessary LUT memory is not available on the host system. This will however degrade the performance in terms of execution time.

A last assumption is that the data can be processed from 8-bit pixel samples. If greater bit-depth than this is required, then this is possible: there would be little or no degradation in performance however the 256byte LUT would need to increase in size in line with the bit-depth desired.

The present implementation can be written in ANSI 'C' without making use of assembler. This choice is in order to maintain a good degree of portability across host platforms. Obviously optimisation through targeted use of specific host assembler would lead to improvements in efficiency in terms of execution speed.

Fig. 2 gives an overview of one embodiment of the invention. In this process, only two passes through the pixel data are required. The first pass makes use of only a sample of the pixels, while the second pass uses all pixels. The first pass makes use of a first look-up table LUT1 and the second pass makes use of a second look-up table LUT2.

Each of the steps of Fig. 2 will now be described in detail.


**First Pass**


**Stats Gathering for White-Balance**

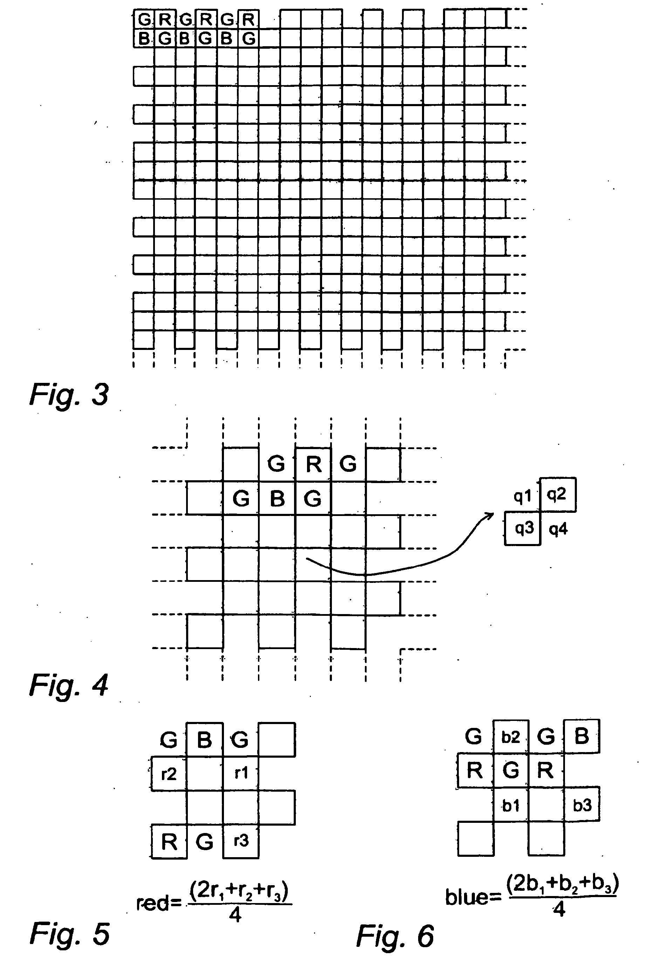

In order to compensate the image for the colour of the illuminating light source, colour channel gains are calculated and applied later in the process. The statistics required to calculate the colour channel gains are gathered first. This is done by accumulating the energy in each of the colour channels from all pixels which are not saturated. In the interests of reducing computational load, this statistics gathering is not applied to every pixel, rather a subsampled image is used instead. The sampling depends on the original image size to a certain extent in that after subsampling there should be enough data from which to derive a statistically relevant assessment of the colour channel energies. A sampling of 8x or 16x is usually sufficient in say a image of vga dimensions (640x480). The sampled pixels are arranged as seen in Fig. 3 (example shown for 4x).

It should be noted that only one of the two greens in a particular 2x2 is used. This therefore assumes that both green dyes are the same or similar.

If none of the red, green and blue pixel values are saturated then channel energies are accumulated as follows:

$$r_{Acc} = \sum_{x,y} \begin{vmatrix} Min(r_{x,y}, g_{x,y}, b_{x,y})r_{x,y} & \text{if } r_{x,y} < I_{Sat} \text{ and } g_{x,y} < I_{Sat} \text{ and } b_{x,y} < I_{Sat} \\ 0 & \text{otherwise} \end{vmatrix}$$

$$g_{Acc} = \sum_{x,y} \begin{vmatrix} Min(r_{x,y}, g_{x,y}, b_{x,y})g_{x,y} & \text{if } r_{x,y} < I_{Sat} \text{ and } g_{x,y} < I_{Sat} \text{ and } b_{x,y} < I_{Sat} \\ 0 & \text{otherwise} \end{vmatrix} \qquad \text{i}$$

$$b_{Acc} = \sum_{x,y} \begin{vmatrix} Min(r_{x,y}, g_{x,y}, b_{x,y})b_{x,y} & \text{if } r_{x,y} < I_{Sat} \text{ and } g_{x,y} < I_{Sat} \text{ and } b_{x,y} < I_{Sat} \\ 0 & \text{otherwise} \end{vmatrix}$$

Once channel energies are accumulated the channel gains are calculated as follows:

$$G_r = \frac{Max(r_{Acc}, g_{Acc}, b_{Acc})}{r_{Acc}}$$

$$G_g = \frac{Max(r_{Acc}, g_{Acc}, b_{Acc})}{g_{Acc}} \qquad \text{ii}$$

$$G_b = \frac{Max(r_{Acc}, g_{Acc}, b_{Acc})}{b_{Acc}}$$

In terms of complexity the statistics gathering takes 6 tests and 3 multiples per red/green/blue triplet. The subsampling used dictates the number of triplets considered.

**Second Pass**

**Range Scaling**

The first process after gathering stats is range scaling. This compensates for black-level and saturation points and can be used to scale the capture pixel data to a known range. The formulae iii describes the process.

$$I' = \begin{vmatrix} I - B_L & \text{if } I > B_L \\ 0 & \text{if } I \leq B_L \end{vmatrix}$$

$$I'' = \frac{(I' S_c + 129)}{256} \qquad \text{iii}$$

$$\text{where} \quad S_c = \frac{256(Max - Min)}{(I_{Sat} - B_L)}$$

*Max* and *Min* are the maximum and minimum values desired in the output range. $I_{sat}$ is the saturation value of the input data (generally 254), while $B_L$ is the black-level of the input data. The constants are correct for 8-bit input and output data widths. Importantly, from an efficiency point of view this range scaling can be implemented in a LUT. For 8-bit data a 256 byte LUT is required, where all the possible input values are converted to the re-scaled range. In this way the single lookup per pixel replaces the following 5 operations per pixel:1 test, 2 additions, 1 multiply, 1 shift
In the present implementation the LUT for scaling is consulted as the pixel values are retrieved from memory for the demosaic process. Demosaic is described next.

**Demosaic**

The Bayer array is processed in blocks of 2x2, or quads. Fig. 4 shows an array in which one quad is highlighted. This contains four pixels q1-q4, of which q1 and q4 are green, q2 is red and q3 is blue.
Processing occurs in order to generate a red, green and blue channel pixel value for each and every pixel location. This is done by first calculating a red and blue value for the entire quad.
With reference to Fig. 5, the red value for each pixel is calculated from the value of the red pixel within the quad plus the values of the adjacent red pixels as follows:

$$red = \frac{(2r_1 + r_2 + r_3)}{4}$$

This requires 3 data access, 2 shifts, 5 additions = 10ops
Similarly, with reference to Fig. 6, the blue value for each pixel is calculated from the value of the blue pixel within the quad plus the values of the adjacent blue pixels as follows:

$$blue = \frac{(2b_1 + b_2 + b_3)}{4}$$

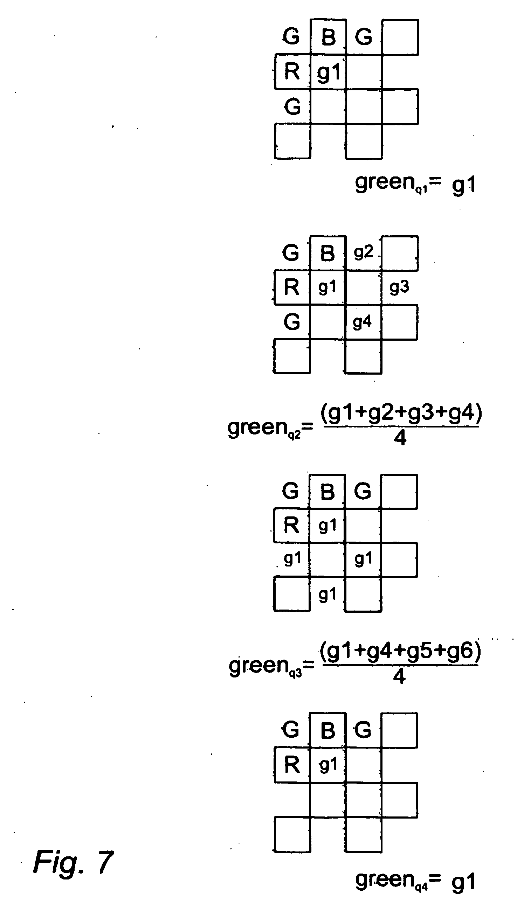

Which again requires 3 data access, 2 shifts, 5 additions = 10ops
For each pixel in the quad there is now a red and blue component calculated, it remains to calculate a green component. There are four pixels in the quad and each green component is calculated as follows, with reference to Fig. 7.

$$green_{q1} = g1 \qquad 1 \text{ data access} = 1 \text{ op}$$

$$green_{q2} = \frac{(g1 + g2 + g3 + g4)}{4} \qquad 4 \text{ data access, 6 additions,}$$
$$1 \text{ shift} = 11 \text{ ops}$$

$$green_{q3} = \frac{(g1 + g4 + g5 + g6)}{4} \qquad 4 \text{ data access, 6 additions,}$$
$$1 \text{ shift} = 11 \text{ ops}$$

$$green_{q4} = g1 \qquad 1 \text{ data access} = 1 \text{ op}$$

The overall output of the pixels in the given quad is:

$$q1rgb = red, green_{q1}, blue$$
$$q2rgb = red, green_{q2}, blue$$
$$q3rgb = red, green_{q3}, blue \qquad \textbf{iv}$$
$$q4rgb = red, green_{q4}, blue$$

In terms of operations per pixel this takes:

| | |
|---|---|
| (10+10)/4 | = 5 for red and blue |
| (1+11+11+1)/4 | = 6 for greens |
| total | = 11 ops per pixel |

**White Balance and Matrix**

The next two steps in processing, the application of white balancing gains and matrixing to correct the colour rendition of the CFA dyes are both done together within one set of arithmetic calculations.

White balance gains are applied as follows:

$$\begin{bmatrix} r' \\ g' \\ b' \end{bmatrix} = \begin{bmatrix} G_r & & \\ & G_g & \\ & & G_b \end{bmatrix} \begin{bmatrix} r \\ g \\ b \end{bmatrix} \qquad \textbf{v}$$

while matrixing is applied as follows:

$$\begin{bmatrix} r'' \\ g'' \\ b'' \end{bmatrix} = \begin{bmatrix} m_{0,0} & m_{0,1} & m_{0,2} \\ m_{1,0} & m_{1,1} & m_{1,2} \\ m_{2,0} & m_{2,1} & m_{2,2} \end{bmatrix} \begin{bmatrix} r' \\ g' \\ b' \end{bmatrix} \qquad \mathbf{vi}$$

By combining these two matrix multiplications we have:

$$\begin{bmatrix} r'' \\ g'' \\ b'' \end{bmatrix} = \begin{bmatrix} m_{0,0} & m_{0,1} & m_{0,2} \\ m_{1,0} & m_{1,1} & m_{1,2} \\ m_{2,0} & m_{2,1} & m_{2,2} \end{bmatrix} \begin{bmatrix} G_r & & \\ & G_g & \\ & & G_b \end{bmatrix} \begin{bmatrix} r \\ g \\ b \end{bmatrix} \qquad \mathbf{vii}$$

$$\begin{bmatrix} r'' \\ g'' \\ b'' \end{bmatrix} = \begin{bmatrix} m_{0,0}G_r & m_{0,1}G_g & m_{0,2}G_b \\ m_{1,0}G_r & m_{1,1}G_g & m_{1,2}G_b \\ m_{2,0}G_r & m_{2,1}G_g & m_{2,2}G_b \end{bmatrix} \begin{bmatrix} r \\ g \\ b \end{bmatrix} \qquad \mathbf{viii}$$

By multiplying this out we obtain:

$$r'' = m_{0,0}G_r r + m_{0,1}G_g g + m_{0,2}G_b b$$
$$g'' = m_{1,0}G_r r + m_{1,1}G_g g + m_{1,2}G_b b \qquad \mathbf{ix}$$
$$b'' = m_{2,0}G_r r + m_{2,1}G_g g + m_{2,2}G_b b$$

So, rather than 12 multiplies to implement both matrix and white balance, we can use only 9. Then there are further saving to be had, by noting that the red and blue values are the same for all pixels in a quad. This means that the following terms are identical for all four pixels in the quad and therefore need only be calculated once rather than four times:

$$m_0 G_{rb} = m_{0,0}G_r r + m_{0,2}G_b b$$
$$m_1 G_{rb} = m_{1,0}G_r r + m_{1,2}G_b b \qquad \mathbf{x}$$
$$m_2 G_{rb} = m_{2,0}G_r r + m_{2,2}G_b b$$

So we have the 6 multiplies above plus 3 multiplies for each of the pixels in the quad. This is the equivalent of 18 multiples for all four pixels, only 4.5 multiplies per pixel. Less than half the 12 multiplies required by equation vii.

Caveat - by combining the white balance and matrix step into one calculation we risk introducing a colour cast in saturated regions of the image. This is because the negative components of the colour compensation matrix together with the white-balance gains can combine to produce an overall gain for a given colour channel which is less than unity. Applying a gain which is less than unity to a saturated region leads to colour casting. Furthermore, the application of gain on its own can push a value into saturation, and from this point on the pixel should be considered saturated. If it is not the subsequent application of matrix can pull the value back below saturation. To avoid these problems, some additional testing needs to be introduced to the above calculation. Essentially we are required to check that the application of gain will not push the pixel into saturation and if it does, clip to that saturated value for the result of white-balance before applying matrix correction. Herein lies the problem, the above equations combine both white-balance and matrix, and there is no opportunity to apply the clip. The solution is to test whether the white-balance pixel values will clip. If they do, then clip the value and apply the matrix calculation as per equation vi. If they don't, apply the simplified calculations detailed by equation ix and equation x.

The testing for a clipped value could be expensive computationally, but the value against which to test all pixels can be pre-calculated from the white-balance gains. On a per pixel basis, it remains only to test against this pre-calculated set of values for red green and blue. In the worst case, this testing costs up to 3 multiplies and 4 comparisons per pixel. The equations are shown below...

$$\text{The limits are given by...}$$

$$R_{Limit} = 261120/(1024G_r)$$
$$G_{Limit} = 261120/(1024G_g) \qquad \text{xi}$$
$$B_{Limit} = 261120/(1024G_b)$$

If $g > G_{Limit}$ then we have the following...

$$t_g = \begin{vmatrix} 1024G_g g & if \ g > G_{Limit} \\ 261120 & otherwise \end{vmatrix}$$

$$t_r = \begin{vmatrix} 1024G_r r & if \ r > R_{Limit} \\ 261120 & otherwise \end{vmatrix}$$

$$t_b = \begin{vmatrix} 1024G_b b & if \ b > B_{Limit} \\ 261120 & otherwise \end{vmatrix}$$

$$\text{xii}$$

$$r'' = m_{0,0}t_r + m_{0,1}t_g + m_{0,2}t_b$$
$$g'' = m_{1,0}t_r + m_{1,1}t_g + m_{1,2}t_b$$
$$b'' = m_{2,0}t_r + m_{2,1}t_g + m_{2,2}t_b$$

...otherwise from eqns ix and x ...

$$r'' = m_0 G_{rb} + m_{0,1} G_g g$$
$$g'' = m_1 G_{rb} + m_{1,1} G_g g \qquad \text{xiii}$$
$$b'' = m_2 G_{rb} + m_{2,1} G_g g$$

The extra multiplies and comparisons required are worst case and where g is below the $G_{Limit}$ then the overhead reduces to only one comparison per pixel. The compromise resolves to this: for a well exposed image with little or no saturated regions the computational complexity resolves to equation xiii.

**Range Clipping and Gamma**

Both range clipping and gamma correction can be done with one LUT. The arithmetic calculations required are as follows:

**Clipping**

$$r''_{clipped} = \begin{cases} I_{Clip} & if \ r > I_{Clip} \\ 0 & if \ r < 0 \\ r'' & otherwise \end{cases}$$

$$g''_{clipped} = \begin{cases} I_{Clip} & if \ g > I_{Clip} \\ 0 & if \ g < 0 \\ g'' & otherwise \end{cases} \qquad \text{xiv}$$

$$b''_{clipped} = \begin{cases} I_{Clip} & if \ b > I_{Clip} \\ 0 & if \ b < 0 \\ b'' & otherwise \end{cases}$$

**Gamma**

$$I_{Out} = I_{In}^{1/\gamma}$$

$$I'_{Out} = \begin{cases} I_{Clip} & if \ I_{Out} > I_{Clip} \\ I_{Out} & otherwise \end{cases} \qquad \text{xv}$$

Other more involved gamma functions can of course be applied, but the principle of the LUT remains unchanged.

### Construction of a LUT for Clipping and Gamma combined

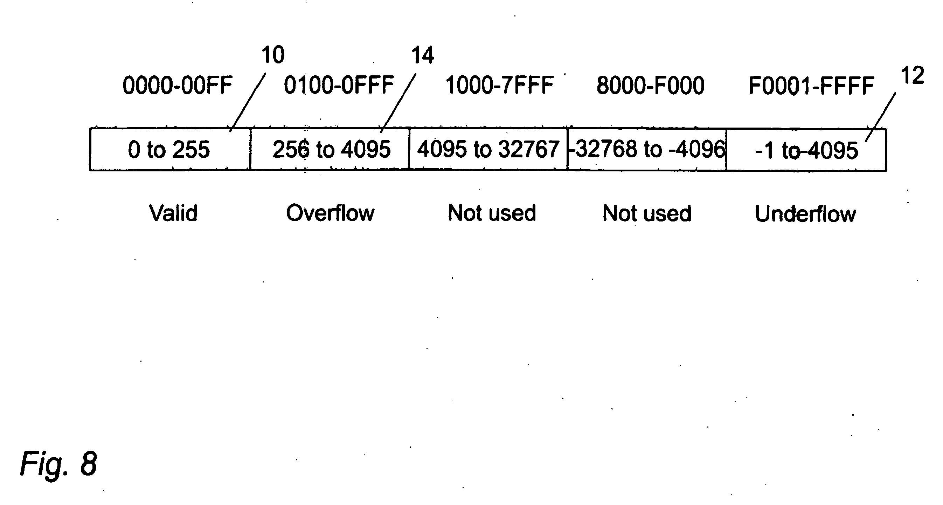

Clipping can be achieved using a 16-bit LUT by making use of the 2's compliment nature of negative integers stored in computers. The LUT is laid out as shown in Fig. 8.
The valid output 10 occupies a small fraction of the 64Kbyte LUT. Why use such a large LUT if the valid output occupies only 256 bytes? The input value to the LUT can be negative and it can also be greater than 255, by using a 64K LUT arranged as shown a single array can be set up to handle all cases of valid, underflow and overflow. Normally this would not be possible as a negative array access is invalid. The alternative would be to add an offset in order to make negative values into positive values, but this would cost an addition (of the offset) per pixel. Instead, by casting the input pixel value to an unsigned short prior to lookup we wrap the negative values to the high values of the unsigned short value 12. It remains now to fill the valid portion of the LUT with values that implement a gamma correction value, and fill the negative area 12 with zeros, and fill the overflow region 14 with $I_{Clip}$. It should be noted that larger bit-depths can be handled with this approach by increasing the size of each of the regions and squeezing the unused parts of the LUT.
Generally, gamma correction is implemented as a LUT in most reconstruction chains, however the saving in computation by including the clipping is 2 tests per colour channel, that is, 6 tests per pixel.
There is an additional shift operation per colour channel per pixel as integer arithmetic is used throughout. For example, white-balance gains and matrix values are stored as the whole number part of value x 1024. This rescaling at the end of the processing (but prior to lookup) adds 3 shifts per pixel.

### Computational Complexity of the Embodiment

The computational complexity in terms of number of operations will now be assessed. For this purpose operations will be split into two categories: 1) multiplies and 2) data access, tests, additions, shifts, lookups and offset calculations. It should also be noted that each implementation is likely to differ slightly from this count, so the figures presented here should be taken as an estimate. In addition some conditions of the algorithm relating to saturated pixels can alter the computational complexity for a given scene. For example a scene which is very badly over-exposed will take longer to colourise using quad than a scene that is well-exposed (few saturated pixels). On the whole it is the automatic-exposure control (aec) algorithm's job to provide a well-exposed image. This is therefore assumed in the following calculation.

| Per Pixel Ops | Multiplies | Other Ops | Total Ops |
|---|---|---|---|
| Stats Gathering* | 1(0) | 3 (0) | 4 (0) |
| Range Scaling | | 2 | 2 |
| Demosaic | | 11 | 11 |
| White-Balance + Matrix | 4.5 | 4 | 8.5 |
| Range Clipping and Gamma | | 9 | 9 |
| Image Traversal | | 5 | 5 |
| **Total** | **5.5(4.5)** | **34(31)** | **39.5(35.5)** |
| * stats gathering is an insignificant overhead when using subsampling of 8 or 16 and can be treated as zero if subsampling is assumed. | | | |

### Example Performance Figures

The table below shows the measured processing time for a vga sized Bayer image (640x480) on a 2.6GHz Pentium4 PC running Win2K with 512MB of RAM. Also shown are estimated cpu loading figures for several specs of machine processing vga sized images at 30 frames per second.

| VGA (640x480) | Per Frame 2.6GHz P4 | 2GHz P4 at 30fps | 1.5GHz P4 at 30fps | 1GHz P4 at 30fps |
|---|---|---|---|---|
| Quad | 4.8mS | 19% | 28% | 37.5% |

### General Discussion

Modifications may be made to the foregoing embodiment within the scope of the present invention.

The method of the invention may be implemented wholly or partially in hardware rather than software. For example, the image sensor will typically be formed by CMOS technology as part of a chip which also performs various image processing steps, and the present invention can be incorporated as hardware at the design stage.

The invention in this form is particularly applicable to digital still and video cameras with viewfinders, mobile phone cameras, and PDAs.

In other situations, however, it will be convenient to implement the invention by software. One example of this is where the image sensor is used as a webcam or similar device in combination with a standard PC or other computer.

The invention makes it possible to perform software reconstruction of images at video rates (e.g. 30fps) with the processing being carried out on a host general purpose computer, or on an embedded processor of sufficient power, because of the significantly reduced computational cost per pixel. This also offers considerable flexibility in an end product such as a web camera or streaming digital stills camera, as the reconstruction is carried out by software which can be easily updated, modified or enhanced as part of the camera's driver.

On the other hand, in a hardware implementation the invention offers lower computation and hence lower operational power and smaller silicon design area, and thus lower cost per die.

### Claims

1.  A method of processing image data produced by a solid state image sensor having a colour filter array of pixels to produce three-component colour signals for each pixel; the method comprising:

    performing collection of white balance statistics in a single data retrieval from a main memory of pixel image data; and
    performing at least range scaling, demosaicing, application of white balance statistics, matrixing, range clipping and gamma correction in a further single data retrieval from a main memory of pixel image data, wherein the application of the white balance statistics collected in the data retrieval from a main memory is done together with the matrixing within one set of arithmetic calculations, and said one set of arithmetic calculations is preceded by a step of testing to determine whether the application of a gain value will push a pixel value into saturation, and then, if the value will be pushed into saturation, clipping the pixel value to a saturated value before matrixing.

2. The method of claim 1 in which the data retrieval from a main memory for white balance statistics collection is performed only on a sample of the pixel data from selected pixels.

3. The method of claim 2, in which the sampling is between 1:4 and 1:16 linearly.

4. The method of any preceding claim, in which range scaling is performed by use of a look-up table as pixel values are retrieved for demosaicing.

5. The method of any preceding claim, in which the colour filter array is a RBG Bayer pattern; in which demosaicing is performed on 2x2 blocks or quads each containing two green, one red, and one blue pixel; and in which a single red value is calculated and applied to all pixels of the quad, and a single blue value is calculated and applied to all pixels of the quad.

6. The method of claim 5, in which said single red value is calculated as $(2r_1+r_2+r_3)/4$ where $r_1$ is the value from the red pixel within the quad and $r_2$ and $r_3$ are the values from red pixels adjacent the quad, and said single blue value is calculated as $(2b_1+b_2+b_3)/4$ where $b_1$ is the value from the blue pixel within the quad and $b_2$ and $b_3$ are the values from blue pixels adjacent the quad.

7. The method of claim 5 ,in which said single red and blue values are used in performing white balancing and matrixing.

8. The method of claim 1, in which said testing comprises testing each colour component value of each pixel against a pre-calculated value for that colour.

9. The method of claim 8, in which the pre-calculated values are derived from white balance gain values.

10. The method of any preceding claim, in which range clipping and gamma correction are performed as a single operation by reference to a look-up table.

11. The method of claim 10, in which the look-up table is organised such that negative input values wrap to high values of an unsigned short value.

12. Apparatus for processing image data produced by a solid state image sensor having a colour filter array of pixels to produce three-component colour signals for each pixel; the apparatus comprising:

means adapted to collect white balance statistics from said image data in a single data retrieval from a main memory; and
range scaling, demosaicing, application of white balance statistics, matrixing, range clipping and gamma correction means adapted to receive said image data and to perform range scaling, demosaicing, application of white balance statistics, matrixing, range clipping and gamma correction in a further single data retrieval from the main memory, wherein:

the range scaling, demosaicing, application of white balance statistics, matrixing, range clipping and gamma correction means comprises calculation means adapted to apply the collected white balance statistics together with the matrixing using one set of arithmetic calculations; and
the calculation means is connected to a testing means, said testing means being for testing to determine whether the application of a gain value will push a pixel value into saturation, and then, if the value will be pushed into saturation, clipping the pixel value to a saturated value before matrixing.

13. A solid state image sensor comprising a colour filter array of pixels providing three-component colour signals for each pixel, and image processing apparatus in accordance with claim 12.

14. A solid state image sensor according to claim 13, in which the colour filter array is a red/green/blue Bayer pattern.

15. A webcam including a solid state image sensor in accordance with claim 13 or claim 14.

16. A webcam according to claim 15, in which at least part of said range scaling, demosaicing, application of white balance statistics, matrixing, range clipping and gamma correction means is implemented by software loaded in a computer with which the webcam is associated.

17. A digital still or video camera including an image sensor in accordance with claim 13 or claim 14.

18. A mobile telephone including an image sensor in accordance with claim 13 or claim 14.

19. A PDA including an image sensor in accordance with claim 13 or claim 14.

**Patentansprüche**

1. Ein Verfahren zur Verarbeitung von Bilddaten, produziert durch einen integrierten Bildsensor mit einer Farbfiltermatrix von Pixeln, um für jedes Pixel Dreikomponentenfarbsignale zu produzieren, wobei das Verfahren Folgendes beinhaltet:

Durchführen der Sammlung von Weißabgleichstatistiken bei einer einzelnen Wiedergewinnung von Daten aus einem Hauptspeicher von Pixelbilddaten; und
Durchführen von mindestens Range Scaling, Demosaicing, Anwendung von Weißabgleichstatistiken, Matrixing, Range Clipping und Gammakorrektur bei einer einzelnen Wiedergewinnung von Daten aus einem Hauptspeicher von Pixelbilddaten,
wobei die Anwendung der bei der Wiedergewinnung von Daten aus einem Hauptspeicher gesammelten Weißabgleichstatistiken gemeinsam mit dem Matrixing innerhalb eines Satzes arithmetischer Berechnungen vorgenommen wird, und dem einen Satz arithmetischer Berechnungen ein Schritt des Testens, um zu bestimmen, ob die Anwendung eines Verstärkungswerts einen Pixelwert in Sättigung bringt, vorausgeht, und dann, wenn der Wert in Sättigung gebracht wird, Clipping des Pixelwerts auf einen gesättigten Wert vor dem Matrixing.

2. Verfahren gemäß Anspruch 1, bei dem die Wiedergewinnung von Daten aus einem Hauptspeicher zur Sammlung von Weißabgleichstatistiken nur auf einer Probe der Pixeldaten von ausgewählten Pixeln durchgeführt wird.

3. Verfahren gemäß Anspruch 2, bei dem das Sampling linear zwischen 1:4 und 1:16 ist.

4. Verfahren gemäß einem der vorhergehenden Ansprüche, bei dem das Range Scaling durch die Verwendung einer Verweistabelle durchgeführt wird, wenn Pixelwerte zum Demosaicing wiedergewonnen werden.

5. Verfahren gemäß einem der vorhergehenden Ansprüche, bei dem die Farbfiltermatrix ein RBG-Bayer-Muster ist, bei dem Demosaicing auf 2x2-Blöcken oder Vierergruppen, von denen jeder/jede zwei grüne, ein rotes und ein blaues Pixel enthält, durchgeführt wird; und bei dem ein einzelner roter Wert berechnet und auf alle Pixel der Vierergruppe angewendet wird und ein einzelner blauer Wert berechnet und auf alle Pixel der Vierergruppe angewendet wird.

6. Verfahren gemäß Anspruch 5, bei dem der einzelne rote Wert als $(2r_1 + r_2 + r_3)/4$ berechnet wird, wobei $r_1$ der Wert von dem roten Pixel innerhalb der Vierergruppe ist und $r_2$ und $r_3$ die Werte von roten Pixeln angrenzend an die Vierergruppe sind, und der einzelne blaue Wert als $(2b_1 + b_2 + b_3)/4$ berechnet wird, wobei $b_1$ der Wert von dem blauen Pixel innerhalb der Vierergruppe ist und $b_2$ und $b_3$ die Werte von blauen Pixeln angrenzend an die Vierergruppe sind.

7. Verfahren gemäß Anspruch 5, bei dem die einzelnen roten und blauen Werte beim Durchführen von Weißabgleichung und Matrixing verwendet werden.

8. Verfahren gemäß Anspruch 1, bei dem das Testen das Testen jedes Farbkomponentenwerts jedes Pixels gegen einen vorberechneten Wert für diese Farbe beinhaltet.

9. Verfahren gemäß Anspruch 8, bei dem die vorberechneten Werte aus Weißabgleichverstärkungswerten erlangt werden.

10. Verfahren gemäß einem der vorhergehenden Ansprüche, bei dem Range Clipping und Gammakorrektur als ein einzelner Vorgang unter Bezug auf eine Verweistabelle durchgeführt werden.

**11.** Verfahren gemäß Anspruch 10, bei dem die Verweistabelle so organisiert ist, dass negative Eingabewerte hohen Werten eines vorzeichenlosen Kurzwerts gleichgesetzt werden.

**12.** Vorrichtung zur Verarbeitung von Bilddaten, produziert durch einen integrierten Bildsensor mit einer Farbfiltermatrix von Pixeln, um für jedes Pixel Dreikomponentenfarbsignale zu produzieren, wobei die Vorrichtung Folgendes beinhaltet:

Mittel, das angepasst ist, um Weißabgleichstatistiken von den Bilddaten bei einer einzelnen Wiedergewinnung von Daten aus einem Hauptspeicher zu sammeln; und

Range Scaling-Mittel, Demosaicing-Mittel, Mittel zur Anwendung von Weißabgleichstatistiken, Matrixing-Mittel, Range Clipping-Mittel und Gammakorrektur-Mittel, die angepasst sind, um die Bilddaten zu empfangen und Range Scaling, Demosaicing, Anwendung von Weißabgleichstatistiken, Matrixing, Range Clipping und Gammakorrektur in einer weiteren einzelnen Wiedergewinnung von Daten aus dem Hauptspeicher durchzuführen, wobei:

das Range Scaling-Mittel, das Demosaicing-Mittel, das Mittel zur Anwendung von Weißabgleichstatistiken, das Matrixing-Mittel, das Range Clipping-Mittel und das Gammakorrektur-Mittel Berechnungsmittel beinhalten, die angepasst sind, um die gesammelten Weißabgleichstatistiken gemeinsam mit dem Matrixing unter Verwendung von einem Satz arithmetischer Berechnungen anzuwenden; und

das Berechnungsmittel mit einem Testmittel verbunden ist, wobei das Testmittel zum Testen ist, um zu bestimmen, ob die Anwendung eines Verstärkungswerts einen Pixelwert in Sättigung bringt, und dann, wenn der Wert in Sättigung gebracht wird, Clipping des Pixelwerts auf einen gesättigten Wert vor dem Matrixing.

**13.** Ein integrierter Bildsensor, der eine Farbfiltermatrix von Pixeln beinhaltet, die für jedes Pixel Dreikomponentenfarbsignale bereitstellt, und eine Bildverarbeitungsvorrichtung gemäß Anspruch 12.

**14.** Integrierter Bildsensor gemäß Anspruch 13, bei dem die Farbfiltermatrix ein rotes/grünes/blaues Bayer-Muster ist.

**15.** Eine Webcam, die einen integrierten Bildsensor gemäß Anspruch 13 oder Anspruch 14 umfasst.

**16.** Webcam gemäß Anspruch 15, bei der mindestens ein Teil des Range Scaling-Mittels, des Demosaicing-Mittels, des Mittels zur Anwendung von Weißabgleichstatistiken, des Matrixing-Mittels, des Range Clipping-Mittels und des Gammakorrektur-Mittels durch Software implementiert wird, die in einem Computer, mit dem die Webcam verbunden ist, geladen ist.

**17.** Eine digitale Standbild- oder Videokamera, die einen Bildsensor gemäß Anspruch 13 oder Anspruch 14 umfasst.

**18.** Ein Mobiltelefon, das einen Bildsensor gemäß Anspruch 13 oder Anspruch 14 umfasst.

**19.** Ein PDA, der einen Bildsensor gemäß Anspruch 13 oder Anspruch 14 umfasst.

**Revendications**

**1.** Un procédé de traitement de données d'image produites par un capteur d'image à semi-conducteurs possédant un tableau de filtres couleurs de pixels pour produire des signaux de couleur à trois composantes pour chaque pixel ; le procédé comprenant les étapes consistant à :

collecter des statistiques de balance des blancs dans une récupération de données unique à partir d'une mémoire principale de données d'image de pixels ; et

effectuer au moins une mise à l'échelle de plage, un dématriçage, une application des statistiques de balance des blancs, un matriçage, un écrêtage de plage et une correction gamma dans une autre récupération de données unique à partir d'une mémoire principale de données d'image de pixels, dans lequel l'application des statistiques de balance des blancs collectées lors de la récupération de données à partir d'une mémoire principale est effectuée conjointement avec le matriçage dans un jeu de calculs arithmétiques, et ledit jeu de calculs arithmétiques est précédé d'une étape de test pour déterminer si l'application d'une valeur de gain poussera la valeur d'un pixel jusqu'à saturation, puis, si la valeur est poussée jusqu'à saturation, d'une étape d'écrêtage de la valeur du pixel à une valeur saturée avant matriçage.

2. Le procédé de la revendication 1 dans lequel la récupération de données à partir d'une mémoire principale pour collecter des statistiques de balance des blancs est effectuée uniquement sur un échantillon des données de pixels issu de pixels sélectionnés.

3. Le procédé de la revendication 2, dans lequel l'échantillonnage est compris entre 1:4 et 1:16 de façon linéaire.

4. Le procédé de n'importe quelle revendication précédente, dans lequel la mise à l'échelle de plage est effectuée par utilisation d'une table de conversion lorsque les valeurs de pixel sont récupérées pour dématriçage.

5. Le procédé de n'importe quelle revendication précédente, dans lequel le tableau de filtres couleur est une matrice de Bayer RVB ; dans lequel le dématriçage est effectué sur des blocs 2x2 ou quadruplés contenant chacun deux pixels verts, un pixel rouge et un pixel bleu ; et dans lequel une valeur unique de rouge est calculée et appliquée à tous les pixels du quadruplé, et une valeur unique de bleu est calculée et appliquée à tous les pixels du quadruplé.

6. Le procédé de la revendication 5, dans lequel ladite valeur unique de rouge est calculée selon la formule $(2r_1+r_2+r_3)/4$ où $r_1$ est la valeur du pixel rouge dans le quadruplé et $r_2$ et $r_3$ sont les valeurs des pixels rouges adjacents au quadruplé, et ladite valeur unique de bleu est calculée selon la formule $(2b_1+b_2+b_3)/4$ où $b_1$ est la valeur du pixel bleu dans le quadruplé et $b_2$ et $b_3$ sont les valeurs des pixels bleus adjacents au quadruplé.

7. Le procédé de la revendication 5, dans lequel lesdites valeurs uniques de rouge et de bleu sont utilisées pour effectuer la balance des blancs et le matriçage.

8. Le procédé de la revendication 1, dans lequel ledit test consiste à tester chaque valeur de composante de couleur de chaque pixel par rapport à une valeur précalculée pour cette couleur.

9. Le procédé de la revendication 8, dans lequel les valeurs précalculées sont dérivées de valeurs de gain de balance des blancs.

10. Le procédé de n'importe quelle revendication précédente, dans lequel l'écrêtage de plage et la correction gamma sont effectués en une seule opération par référence à une table de conversion.

11. Le procédé de la revendication 10, dans lequel la table de conversion est organisée de telle sorte que des valeurs d'entrée négatives correspondent à des valeurs hautes d'une valeur courte non signée.

12. Appareil destiné au traitement de données d'image produites par un capteur d'image à semi-conducteurs comportant un tableau de filtres couleur de pixels pour produire des signaux de couleur à trois composantes pour chaque pixel ; l'appareil comprenant :

un moyen permettant de collecter des statistiques de balance des blancs à partir desdites données d'image dans une récupération de données unique à partir d'une mémoire principale ; et
un moyen de mise à l'échelle de plage, de dématriçage, d'application de statistiques de balance des blancs, de matriçage, d'écrêtage de plage et de correction gamma permettant de recevoir lesdites données d'image et d'effectuer la mise à l'échelle de plage, le dématriçage, l'application de statistiques de balance des blancs, le matriçage, l'écrêtage de plage et la correction gamma dans une autre récupération de données unique à partir de la mémoire principale, dans lequel :

le moyen de mise à l'échelle de plage, de dématriçage, d'application de statistiques de balance des blancs, de matriçage, d'écrêtage de plage et de correction gamma comprend un moyen de calcul permettant d'appliquer les statistiques de balance des blancs collectées conjointement avec le matriçage à l'aide d'un jeu de calculs arithmétiques ; et
le moyen de calcul est relié à un moyen de test, ledit moyen de test étant destiné à faire des tests pour déterminer si l'application d'une valeur de gain poussera la valeur d'un pixel jusqu'à saturation, puis, si la valeur est poussée jusqu'à saturation, écrêter la valeur du pixel à une valeur saturée avant matriçage.

13. Un capteur d'image à semi-conducteurs comprenant un tableau de filtres couleur de pixels procurant des signaux de couleur à trois composantes pour chaque pixel, et un appareil de traitement des images conformément à la revendication 12.

**14.** Un capteur d'image à semi-conducteurs selon la revendication 13, dans lequel le tableau de filtres couleur est une matrice de Bayer rouge/vert/bleu.

**15.** Une webcam comportant un capteur d'image à semi-conducteurs conformément à la revendication 13 ou à la revendication 14.

**16.** Une webcam selon la revendication 15, dans laquelle au moins une partie dudit moyen de mise à l'échelle de plage, de dématriçage, d'application de statistiques de balance des blancs, de matriçage, d'écrêtage de plage et de correction gamma est mise en oeuvre par un logiciel chargé dans un ordinateur auquel la webcam est associée.

**17.** Un appareil photo numérique ou une caméra vidéo numérique comportant un capteur d'image conformément à la revendication 13 ou à la revendication 14.

**18.** Un téléphone mobile comportant un capteur d'image conformément à la revendication 13 ou à la revendication 14.

**19.** Un assistant personnel numérique comportant un capteur d'image conformément à la revendication 13 ou la revendication 14.

Bayer CFA

Pass 1 | White Balance Stats Gathering

Pass 2 | Range Scaling

Pass 3 | Demosaic

Pass 4 | White Balance Applied

Pass 5 | Matrix & Range Clipping

Pass 6 | Gamma

RGB

*Fig. 1*

Bayer CFA

White Balance Stats Gathering — Pass 1

Range Scaling — LUT 1
Demosaic

White Balance Applied
Matrix
Range Clipping & Gamma — LUT 2 — Pass 2

RGB

*Fig. 2*

**Fig. 3**

**Fig. 4**

$$red = \frac{(2r_1 + r_2 + r_3)}{4}$$

**Fig. 5**

$$blue = \frac{(2b_1 + b_2 + b_3)}{4}$$

**Fig. 6**

$$green_{q1} = g1$$

$$green_{q2} = \frac{(g1+g2+g3+g4)}{4}$$

$$green_{q3} = \frac{(g1+g4+g5+g6)}{4}$$

*Fig. 7*

$$green_{q4} = g1$$

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6757012 B, Hubena
- US 5008739 D, D'Luna
- US 3971065 A, Bayer